# EUROPEAN PATENT SPECIFICATION

(11) **EP 0 186 787 B1**
(45) Date of publication and mention of the grant of the patent: **24.02.1993**
(21) Application number: 85115083.9
(22) Date of filing: 28.11.1985
(51) Int. Cl.: B32B 17/10, B32B 27/08, C03C 27/12

(54) **Process for producing a laminated glass**
Verfahren zur Herstellung eines Verbundglases
Procédé de fabrication d'un verre laminé

(30) Priority: 04.12.1984 JP 255037/84
(43) Date of publication of application: 09.07.1986
(73) Proprietor: ASAHI GLASS COMPANY LTD., Chiyoda-ku, Tokyo (JP)
(72) Inventor: Fukawa, Satoru, Yokohama-shi Kanagawa-ken (JP)
(74) Representative: Wächtershäuser, Günter, Prof. Dr.

(56) References cited:
- LU-A- 61 517
- US-A- 4 180 426

## Description

The present invention relates to a novel process for producing a laminated glass.

A laminated product in which an interlayer of an adhesive synthetic resin such as polyvinyl butyral, polyurethane or silicone resin is sandwiched between and integrally bonded to a plurality of transparent sheets such as glass or plastic sheets, is known as a laminated glass (e.g LU-A-61517). Such a laminated glass is widely used as a window glass for various transportation vehicles such as automobiles, trains, air planes or ships, or as a window glass for buildings. Heretofore, such a laminated glass has been prepared by preliminarily press-bonding a laminate comprising a plurality of transparent sheets and an adhesive synthetic resin interlayer interposed therebetween, either by passing the laminate between nip rollers or by inserting the laminate into a rubber bag for preliminary press-bonding, followed by sealing and deaerating, and then placing the preliminarily press-bonded laminate into an autoclave and press-bonding it under a high temperature and high pressure condition (US-A-4180426). However, such processes have a drawback that a preliminary press-bonding operation is required which involves the use of nip rollers or a plurality of cumbersome steps with use of a bag for preliminary press-bonding, thus resulting in a high production cost. Further, such processes have a problem that in the case of a laminate having a complicated shape or a shape with a large curvature, it is extremely difficult to conduct the preliminary press-bonding. Depending upon the type of the laminated glass, the vacuum deaeration is required not only for the preliminary press-bonding but also for the final press-bonding. In such a case, the conventional rubber bag process or nip roller process can not be used, and the final bonding in the autoclave will have to be conducted under a deaerated condition.

Further, in a case where a laminated glass composed of a combination of a glass sheet and a plastic sheet is to be prepared, it is necessary that the plastic surface is always pressed with a smooth surfaced plate or film during the press-bonding operation, in order to obtain a product having a good plastic surface. However, if the conventional rubber bag is used for the preliminary press-bonding, the rough inner surface of the rubber bag will be in contact with the plastic surface, whereby the plastic surface will be adversely affected. Besides, after the preliminary press-bonding, the laminate is taken out of the rubber bag, and therefore the plastic surface is not protected during the final press-bonding.

Under the circumstances, it is an object of the present invention to solve the above problems and to provide a process wherein the preliminary press-bonding can be simplified so that the production cost can be reduced and the preliminary press-bonding can be applied to laminates having various shapes.

The present invention provides a process for producing a laminated glass which comprises:
inserting a laminate comprising at least two transparent sheets and an adhesive synthetic resin interlayer, wherein the transparent sheet constituting one surface of the laminated glass is formed by a plastic material and the transparent sheet constituting the other surface is formed by glass, into a vacuum packaging bag which is made of a plastic film having a softening point of at least 90°C and has at least a sealing portion of heat seal type or bonding type; vacuuming the vacuum packaging bag; sealing the bag; preliminarily pressing the laminate in the sealed bag; heating the preliminarily pressed laminate in the sealed bag for the final press-bonding to thereby pressbond the transparent sheets and the adhesive synthetic resin interlayer integrally, whereby the vacuum packaging bag is utilized as a packaging material.

Now, the present invention will be described in detail with reference to the preferred embodiments.

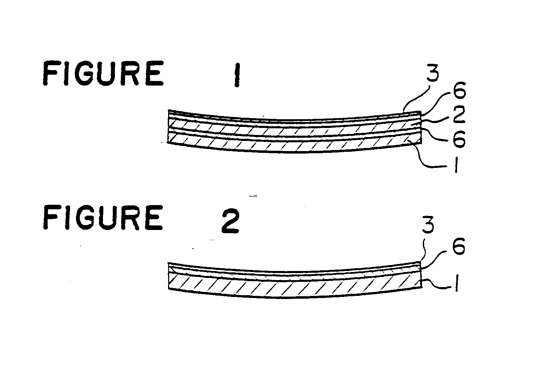

In the accompanying drawings, Figures 1 and 2 show cross-sectional views of various types of laminated glasses produced by the process of the present invention.

Figures 3 to 5 are diagrammatic views illustrating a preliminary press-bonding apparatus according to the present invention.

The transparent sheets used in the present invention are inorganic glass sheets or plastic sheets made of a polycarbonate, an acrylic resin or various other types of plastics, or plastic films made of a polyethylene terephthalate, nylon or various other types of plastics. Such transparent sheets may be the ones subjected to bending processing or tempering processing, or the ones to which a transparent surface coating, a translucent surface coating or an opaque surface coating such as a conductive coating, an infrared reflecting coating, a color coating or a hard coating, is applied partially or wholely.

The adhesive synthetic resin interlayer serves to bond a plurality of such transparent sheets. The adhesive synthetic resin interlayer is preferably made of a material which, when bonded, provides transparency and a refractive index substantially equal to the transparent sheets and which has excellent adhesive properties to the transparent sheets. For instance, it is preferred to employ an interlayer for lamination composed of an adhesive synthetic resin interlayer made of polyvinyl butyral, polyurethane, an ethylene-vinyl acetate copolymer or a silicone resin.

Figures 1 and 2 to diagrammatically illustrate some examples of the laminated glass structures which can be produced by the process of the present invention. Figure 1 illustrates a laminated glass comprising a pair of glass sheets 1 and 2 with an adhesive synthetic resin interlayer 6, which further includes a plastic film 3 made of e.g. polyethylene terephthalate or nylon, overlaid on the glass plate 2 with an adhesive synthetic resin interlayer 6 interposed therebetween. Figure 2 illustrates a laminated glass wherein an adhesive synthetic resin interlayer 6 is sandwiched between and bonded integrally to a sheet of glass plate 1 and a sheet of plastic film 3.

For the production of the laminated glass according to the present invention, firstly a laminate is prepared in which at least one sheet of an adhesive synthetic resin interlayer is sandwiched between at least two transparent sheets such as glass plate-plastic plate, glass plate-plastic film, or glass plate-glass plate-plastic film. Further, for the production of a laminated glass having a structure of glass plate/adhesive synthetic resin interlayer/glass plate/adhesive synthetic resin interlayer/plastic film as in the case of Figure 1 or a laminated glass having a structure of glass plate/ adhesive synthetic resin interlayer/plastic film as in the case of Figure 2, a cover glass plate 7 or other supporting plate may be overlaid on the plastic film in order to improve the press-bonding properties of the plastic film to the adhesive synthetic resin interlayer, and to improve the flatness of the plastic film for an improvement of the optical properties.

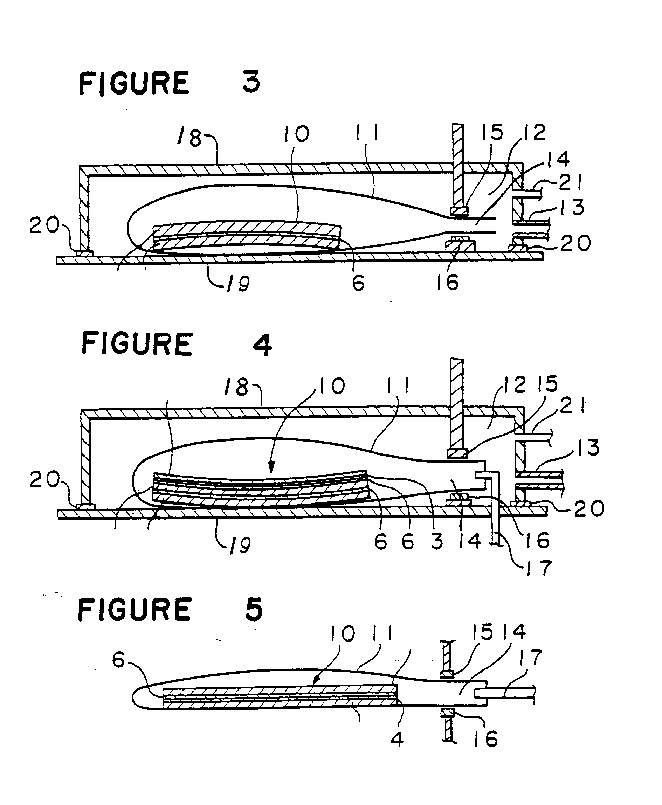

The laminate thus prepared is inserted into a vacuum packaging bag, and the vacuum packaging bag is then vacuumed to evacuate the interior of the bag for preliminary press-bonding, and then the vacuumed bag is sealed. Such a process is preferably conducted as illustrated in Figure 3 wherein a laminate 10 is inserted in a vacuum packaging bag 11 wherein at least the sealing portion around the opening 14 has a heat-sealable property, and then the vacuum packaging bag 11 is introduced into a vacuum chamber 12, or a laminate 10 is inserted into such a vacuum packaging bag 11 already located in such a vacuum chamber 12, and then the vacuum chamber 12 is vacuumed by a deaerating pipe 13 to evacuate the vacuum chamber and the vacuum packaging bag 11, and then the opening portion 14 of the bag is heat-sealed by heat sealing members 15 and 16 to seal the vacuum packaging bag 11. Or, as illustrated in Figure 4, a laminate 10 is inserted in a vacuum packaging bag 11 wherein at least the sealing portion around the opening 14 has a heat-sealable property, and then the bag 11 is introduced into a vacuum chamber 12, or a laminate 10 is inserted into such a vacuum packaging bag 11 already located in such a vacuum chamber 12, the opening portion of the vacuum packaging bag 11 is held open, and the vacuum chamber 12 and the vacuum packaging bag 11 are respectively vacuumed by a deaerating pipe 13 for the vacuum chamber and a deaerating pipe 17 for the vacuum packaging bag to evacuate the interiors of the vacuum chamber 12 and the vacuum packaging bag 11, and then the opening portion 14 of the vacuum packaging bag 11 is heat-sealed by heat sealing members 15 and 16 to seal the vacuum packaging bag 11. These two methods are preferred from the viewpoint of the operation efficiency for vacuuming and the secure preliminary press-bonding. However, the process of the present invention may also be carried out as shown in Figure 5, wherein a laminate 10 is inserted in a vacuum packaging bag 11 wherein at least the opening portion 14 has a heat sealable property, and then the vacuum packaging bag 11 is vacuumed by a deaerating pipe 17 to evacuate the interior of the bag 11, without introducing the bag 11 into a vacuum chamber, and then the opening portion 14 of the bag 11 is heat-sealed by heat sealing members 15 and 16 to seal the vacuumed bag 11. After sealing the vacuumed bag containing the laminate in the vacuum chamber, the atmospheric air is introduced via an air supply pipe 21 into the vacuum chamber to bring the pressure to atmospheric pressure, and then the vacuumed bag containing the laminate is taken out from the vacuum chamber.

The process step for the preliminary press-bonding by the evacuation of the interior of the vacuum packaging bag 11 may adequately be conducted at room temperature. However, in some cases, the preliminary press-bonding may be conducted under heating at an optional temperature of not higher than about 120^{o}C.

In the embodiments shown in Figures 3 to 5, the sealing of the vacuum packaging bag is conducted by heat sealing. However, the sealing of the opening portion of the vacuum packaging bag may be conducted by a suitable method other than heat sealing, for instance, by the pressure contact, press-bonding or heating, by imparting adhesive or bonding properties to the sealing portion of the opening of the bag.

The laminate thus vacuum-packed in the vacuum packaging bag is, preferably in the state packed in the vacuumed bag, introduced into a heating chamber or passed through a heating zone and thereby heated for final press-bonding, or introduced into an autoclave and subjected to heat pressing for final press-bonding. The laminate may be taken out from the vacuum packaging bag before it is subjected to the final press-bonding. However, it is preferred to maintain the laminate in the vacuum packaging bag and not to release the vacuum packed condition, so that the preliminary press-bonding state of the laminate can be maintained until it is subjected to the final press-bonding, and the final press-bonding can be conducted with adequate bonding strength without leading to formation of air bubbles or white turbidity.

The conditions for the final press-bonding vary depending upon the type of the adhesive synthetic resin interlayer used, and the conditions are optionally selected depending upon the type of the interlayer. For instance, in the case of a thermoplastic adhesive synthetic resin interlayer made of polyvinyl butyral, the final press-bonding is preferably conducted in an autoclave at a temperature of from 110 to 140^{o}C under a pressure of 5 to 15 atm for from 15 minutes to 2 hours. Likewise, in the case of a thermosetting adhesive synthetic resin interlayer, the final press-bonding is preferably conducted in a heating chamber at a temperature of from 50 to 150^{o}C.

After the final press-bonding, the laminate is taken out from the heating chamber or the autoclave and, if necessary, cooled to room temperature, to obtain a laminated glass product. In a case where a cover glass plate 7 is overlaid on the plastic surface of the laminate as shown in Figure 4, the cover glass plate 7 is removed after the-final press-bonding to obtain a final product.

The vacuum packaging bag used in the present invention is preferably made of a heat-sealable or a hot meltable plastic material in its entirety or at least at the sealing portion of the opening of the vacuum packaging bag, when the sealing of the bag is conducted by heat sealing. Otherwise, the bonding surface of the sealing portion of the opening of the vacuum packaging bag may be made of a material having adhesive or bonding properties, and the sealing of the opening of the vacuum packaging bag may be conducted by utilizing such adhesive or bonding properties or by further applying heat. Further, in the case where the final press-bonding is conducted by heating or heat pressing in a heating chamber or in an autoclave without taking out the laminate from the vacuum packaging bag after the preliminary press-bonding conducted by inserting the laminate in the vacuum packaging bag and evacuating the interior of the bag, it is preferred to use a vacuum packaging bag made of a material having adequate heat resistance so that it will not melt or soften even at the above-mentioned heating temperature, e.g. a temperature of from 50 to 150^{o}C. The plastic material therefore has a softening point of at least about 90^{o}C. It is common to employ a film made of a single layer or a plurality of layers of plastic films as the vacuum packaging bag. For instance, there may be mentioned a thermoplastic single layer plastic film made of polyethylene, polypropylene, a vinyl chloride resin or an ethylene-vinyl acetate copolymer for the heat sealing type. Or there may be mentioned a double layer type comprising the above-mentioned plastic film on the inner side for heat sealing and a nylon film or a polyester film on the outer side, as a typical example. However, the vacuum packaging bag is not restricted to such specific examples.

The shape of the vacuum packaging bag is optionally selected depending upon the shape of the laminate to be subjected to the preliminary press-bonding, and is not particularly restricted. The vacuum packaging bags shown in Figures 3 to 5 are in the form of envelopes with their one side being an opening. The bags of this type are convenient, since the sealing operation can readily be completed by the heat sealing of said one side.

Further, it is possible to prepare vacuum packaging bags in a vacuum chamber from a strip-shaped or an envelope-shaped continuous plastic film by heat sealing, and insert laminates into such vacuum packaging bags.

Of course, the preliminary press-bonding operation by means of the vacuum packaging bags in the vacuum chamber may be conducted simultaneously with respect to a plurality of laminates. Or, the preliminary press-bonding of laminates may continuously be carried out.

The vacuum chamber illustrated in Figure 3 or 4 is defined by a closure 18 detachably mounted on a base plate 19 So that a laminate may be introduced into the vacuum chamber. When the closure is closed on the base plate, the hermetic sealing of the vacuum chamber is maintained by a packing 20. Various types of systems or mechanisms may be employed for the opening and closing of the vacuum chamber for the introduction of the laminates or the vacuum packaging bags containing laminates into the vacuum chamber.

In the present invention, the vacuum packaging bags may be made of a relatively thin plastic film since they are required to be durable only for one operation for the preparation of laminated glass.

When one of the transparent sheets is a plastic film, the adhesive synthetic resin interlayer may preliminarily be formed as an adhesive layer on one side of the plastic film.

Now, the present invention will be described in further detail with reference to Examples. However, it should be understood that the present invention is by no means restricted by these specific Examples.

### EXAMPLE 1

Between a pair of curved glass sheets (length: 300 mm, witdth: 300 mm, thickness: 2.3 mm) having the same curvature, a polyvinyl butyral interlayer (thickness: 0.76 mm (30 mil)) having the same size was sandwiched, and a polyethylene terephthalate film (thickness: 0.38 mm (15 µm) with a surface hardening coating having the same size as the glass sheets was overlaid thereon with a polyvinyl butyral interlayer (thickness: 0.38 mm (15 mil)) interposed therebetween. Further, a cover glass plate treated with a releasing agent and having the same size was overlaid on the polyethylene terephthalate film, to obtain a laminate. This laminate was inserted into a vacuum packaging bag made of nylon and polyethylene and having an opening along one side. The bag containing the laminate was introduced into a vacuum chamber as shown in Figure 5, and after sealing the vacuum chamber, air was withdrawn from a deaerating pipe by the operation of a vacuum pump to evacuate the vacuum chamber and the vacuum packaging bag to a vacuum level of 82.8 kPa (700 mmHg). Then, the opening of the vacuum packaging bag was pressed by heat sealing members heated to a temperature of 150^{o}C and heat-sealed. Then, the vacuum chamber was returned to normal pressure, and the preliminarily press-bonded laminate was withdrawn from the vacuum chamber. The operation was conducted at room temperature. The preliminarily press-bonded laminate was transparent and free from air bubbles. Then, the laminate was introduced into an autoclave as vacuum-packed in the vacuum packaging bag, and subjected to final press-bonding at 120^{o}C under 15 atm for 40 minutes. Then, the product was taken out from the autoclave. The laminated glass obtained by peeling off the cover glass plate and having a structure of glass plate/polyvinyl butyral interlayer/glass plate/polyvinyl butyral interlayer/polyethylene terephthalate film, was transparent and free from optical strain and had excellent adhesive properties.

As described in the foregoing, according to the present invention, the preliminary press-bonding can be completed in a short period of time simply by inserting a laminate prepared for the production of a laminated glass into a vacuum packaging bag, then vacuuming the bag and sealing the opening of the vacuumed bag without any special heating. Further, the final press-bonding can readily be conducted by simply heat pressing the preliminarily press-bonded laminate in an autoclave, whereby the process step for the final press-bonding can be simplified and there is an additional advantage that the production time can be shortened. Furthermore, the vacuum packaging bag is thin and light, and thus provides an advantage for conservation of energy in the heat treatment. It is not necessary to use such an expensive rubber bag as used for the conventional preliminary press-bonding, and therefore the production cost can be reduced. It is difficult to apply the conventional preliminary press-bonding method wherein a conventional rubber bag for preliminary press-bonding or nip rolls are employed, to the preliminary press-bonding of a laminated glass having a plastic film on its surface or to the press-bonding where a laminated glass having a special shape such as a laminated glass having a deep double bent surface or a laminated glass having a special construction for automobiles, aircrafts or railway vehicles or a laminated glass for sealing-in a solar cell is to be treated. Whereas, according to the present invention a vacuum packaging bag is employed which can be applied to various shapes and structures, and the process of the present invention is applicable to such areas where the conventional press-bonding methods are hardly applicable.

Moreover, if the laminated glass is maintained as packed in the vacuum packaging bag after the final press-bonding, such a vacuum packaging bag serves as a substitute for a packaging bag of the laminated glass, whereby the packaging operation for the laminated glass can be omitted, and no fresh packaging material is required, thus saving the cost.

## Claims

1. A process for producing a laminated glass which comprises:
inserting a laminate (10) comprising at least two transparent sheets (1,2,3,4 or 5) and an adhesive synthetic resin interlayer (6) wherein the transparent sheet constituting one surface of the laminated glass is formed by a plastic material and the transparent sheet constituting the other surface is formed by glass, into a vacuum packaging bag (11) which is made of a plastic film having a softening point of at least 90°C and has at least a sealing portion of heat seal type or bonding type; vacuuming the vacuum packaging bag (11); sealing the bag (11); preliminarily pressing the laminate (10) in the sealed bag (11); heating the preliminarily pressed laminate in the sealed bag for the final press-bonding to thereby pressbond the transparent sheets and the adhesive synthetic resin interlayer integrally, whereby the vacuum packaging bag (11) is utilized as a packaging material.

2. The process according to Claim 1, wherein the vacuum packaging bag (11) containing the laminate (10) is introduced into a vacuum chamber (12), and the vacuum chamber is vacuumed and then the bag is sealed.

3. The process according to Claim 1, wherein a cover glass plate (7) is overlaid on the plastic material of the laminate before vacuuming and the cover glass plate (7) is removed after pressbonding.

## Patentansprüche

1. Verfahren zum Herstellen eines Verbundglases, umfassend:
Einführen eines Laminats (10) mit mindestens zwei durchsichtigen Platten (1, 2, 3, 4 oder 5) und einer adhäsiven Kunstharzzwischenschicht (6), wobei die durchsichtige Platte, die eine Oberfläche des Verbundglases bildet, aus einem Kunststoffmaterial besteht, und die durchsichtige Platte, die die andere Oberfläche bildet, aus Glas besteht, in einen Vakuumverpackungsbeutel (11), der aus einem Kunststoffilm mit einem Erweichungspunkt von mindestens 90°C besteht und mindestens einen Abdichtbereich vom Heißversiegelungstyp oder vom Verklebungstyp aufweist; Evakuieren des Vakuumverpakkungsbeutels (11), dichtes Verschließen des Beutels (11); vorbereitendes Pressen des Laminats (10) im abgedichteten Beutel (11); Aufheizen des vorbereitend gepreßten Laminats im abgedichteten Beutel zum Ausführen abschließenden Preßbondens, um dadurch die durchsichtigen Platten und die adhäsive Kunstharzzwischenschicht integral durch Preßbonden zu verbinden, wobei der Vakuumverpackungsbeutel (11) als Verpackungsmateral verwendet wird.

2. Verfahren nach Anspruch 1, bei dem der das Laminat (10) enthaltende Vakuumverpackungsbeutel (11) in eine Vakuumkammer (12) eingeführt wird und die Vakuumkammer evakuiert wird und dann der Beutel dicht verschlossen wird.

3. Verfahren nach Anspruch 1, bei dem eine Abdeckglasplatte (7) auf das Kunststoffmaterial des Laminats vor dem Evakuieren gelegt wird und die Abdeckglasplatte (7) nach dem Preßbonden entfernt wird.

## Revendications

1. Procédé de fabrication d'un verre feuilleté, qui comprend :
- l'introduction d'un feuilleté (10) comprenant au moins deux feuilles transparentes (1, 2, 3, 4 ou 5) et une couche intermédiaire (6) de résine synthétique adhésive, la feuille transparente constituant l'une des surfaces du verre feuilleté étant formée par une matière plastique, et la feuille transparente constituant l'autre surface étant formée par du verre, dans un sac d'emballage sous vide (11), qui est fait d'un film de matière plastique ayant un point de ramollissement d'au moins 90°C et a au moins une partie scellable du type par thermoscellage ou du type par liaison ;
- la mise sous vide du sac d'emballage sous vide (11) ;
- le scellage du sac (11) ;
- la compression préalable du feuilleté (10) dans le sac scellé (11) ;
- le chauffage du feuilleté ayant été soumis à la compression préalable dans le sac scellé pour la liaison finale par compression, pour lier ainsi par compression les feuilles transparentes et la couche intermédiaire de résine synthétique adhésive afin d'obtenir un matériau d'un seul tenant,
ce par quoi le sac d'emballage sous vide (11) est utilisé comme matériau d'emballage.

2. Procédé selon la revendication 1, dans lequel le sac d'emballage sous vide (11) contenant le feuilleté (10) est introduit dans une chambre de mise sous vide (12), et on fait le vide dans la chambre de mise sous vide, puis le sac est scellé.

3. Procédé selon la revendication 1, dans lequel une plaque de verre de recouvrement (7) est appliquée pour couvrir la matière plastique du feuilleté avant la mise sous vide, et la plaque de verre de recouvrement (7) est retirée après la liaison par compression.
